# FASCICULE DE BREVET EUROPEEN

(11) **EP 1 763 097 B1**
(45) Date de publication et mention de la délivrance du brevet: **05.08.2009**
(21) Numéro de dépôt: 06291402.3
(22) Date de dépôt: 05.09.2006
(51) Int. Cl.: H01M 4/24, H01M 4/32, H01M 4/62, H01M 10/24, H01M 10/30, H01M 4/02

(54) **Electrode positive pour accumulateur alcalin**
Positive Elektrode für alkalische Batterie
Positive electrode for alkaline battery

(30) Priorité: 09.09.2005 FR 0509185
(43) Date de publication de la demande: 14.03.2007
(73) Titulaire: SAFT GROUPE SA, 93170 Bagnolet (FR)
(72) Inventeur: Bernard, Patrick, 33000 Bordeaux (FR)
(74) Mandataire: Hirsch & Associés

(56) Documents cités:
- EP-A- 0 884 791
- EP-A- 0 930 663
- EP-A- 1 447 867
- WO-A-00/10212
- JP-A- 55 004 890
- JP-A- 56 084 876
- JP-A- 56 141 170
- JP-A- 58 150 270
- JP-A- 63 081 766
- US-A- 4 614 696

## Description

### DOMAINE TECHNIQUE

La présente invention concerne une électrode positive (cathode) pour accumulateur à électrolyte alcalin, comme par exemple les accumulateurs nickel-cadmium, nickel-fer, nickel-hydrogène et nickel-métal hydrure. Elle s'étend en outre à l'accumulateur contenant une telle électrode.

### ETAT DE LA TECHNIQUE

Il existe plusieurs types d'électrodes susceptibles d'être utilisées dans un accumulateur à électrolyte alcalin, tels que les électrodes frittées et les électrodes non frittées, dites aussi empâtées ou plastifiées. Par rapport aux autres types d'électrodes, une électrode non frittée contient une plus grande quantité de matière active, sa capacité volumique est donc augmentée, et son coût de fabrication est plus faible.

Une électrode non frittée au nickel se compose d'un support conducteur électrique servant de collecteur de courant, sur lequel on dépose une pâte contenant la matière active électrochimique à base d'hydroxyde de nickel Ni(OH)₂.

Le support conducteur peut être tridimensionnel et être par exemple constitué d'une mousse de nickel. Il peut aussi être bidimensionnel et dans ce cas, il est généralement constitué d'une feuille de métal perforé ou d'une feuille de métal déployé. Une fois la pâte déposée sur le support, l'ensemble est comprimé et séché pour obtenir une électrode de la densité et de l'épaisseur souhaitées.

Le procédé de fabrication d'une électrode comprenant un support conducteur bidimensionnel est plus simple et moins coûteux à mettre en oeuvre que pour une électrode comportant un support tridimensionnel. C'est pourquoi, l'utilisation d'un support bidimensionnel est parfois préférée à celle d'un conducteur tridimensionnel.

Cependant, la tenue mécanique de la matière active et son adhésion au support bidimensionnel sont généralement insuffisantes. Afin d'améliorer la tenue mécanique et l'adhésion de la matière active au support bidimensionnel, plusieurs solutions ont été proposées.

Le document EP-A-0930663 propose d'ajouter à la matière active un liant qui est un mélange d'un élastomère et d'un polymère cristallin.

Le document EP-A-1255313 propose d'ajouter à la matière active un liant qui est un mélange d'un copolymère de butadiène et d'un copolymère de l'éthylène et de l'acétate de vinyle.

Une autre solution, décrite dans le document EP-A-0750358, consiste à utiliser un support conducteur constitué d'une plaque métallique ondulée sur laquelle sont formées des dents. La surface de cette plaque ondulée est recouverte d'une couche micro rugueuse composée de poudre de nickel et/ou de cobalt liée par un alcool polyvinylique. Sur cette couche, on dépose une pâte comprenant un liant qui est un mélange de carboxyméthylcellulose CMC et d'un copolymère styrène/butadiène SBR.

Le document WO-A-00/10212 décrit une électrode plastifiée comprenant une matière active à base d'hydroxyde de nickel, un liant, un composé conducteur et un matériau conducteur sous la forme de fibres de nickel. Le pourcentage de fibres de nickel représente d'environ 0,1% à environ 35% du poids de l'hydroxyde de nickel, de préférence d'environ 2% à environ 10% du poids de l'hydroxyde de nickel. Il est précisé que cette électrode présente une conductivité et une capacité élevées.

L'ajout d'un liant à la matière active présente les désavantages suivants :

D'une part, il a pour effet de réduire la quantité de matière active par électrode et donc la capacité volumique de l'accumulateur. En effet, le volume de pâte pouvant être supporté par le collecteur de courant étant fixe, la présence d'un liant oblige à réduire la quantité des autres constituants de la pâte, comme par exemple la quantité de matière active.

D'autre part, le liant est le plus souvent constitué d'un polymère qui a tendance à se dégrader au cours de l'utilisation de l'accumulateur. Le polymère va générer une quantité importante de carbonates, proportionnelle à la quantité de polymère initialement présente dans l'accumulateur. Sans vouloir être lié par la théorie, la Demanderesse pense que la présence de carbonates est préjudiciable aux performances électriques de l'accumulateur.

Le document EP-A-1 447 867 décrit un générateur électrochimique secondaire à électrolyte alcalin comprenant une électrode non-frittée comportant un support conducteur bidimensionnel recouvert d'une couche contenant une matière électrochimiquement active et un liant qui est un mélange d'un composé cellulosique et d'un copolymère styrène-acrylate. Avantageusement, la couche active contient en outre des fibres polymères, telles que des fibres de polypropylène. De préférence, ces fibres ont une longueur de 0,1 mm à 1,5 mm et un diamètre compris entre 10 µm et 30 µm. La proportion de fibres peut être de 0,3% en poids par rapport au poids de la couche active. Ces fibres sont destinées à renforcer la tenue mécanique de l'électrode.

Le document JP58-150270 décrit une électrode de nickel empâtée comprenant de la poudre d'hydroxyde de nickel comme matière active, mélangée à un agent conducteur, un liant, ainsi que des fibres isolantes, telles que des résines synthétiques et/ou des fibres conductrices, telles que des fibres métalliques et en particulier des fibres de nickel. Le pourcentage massique des fibres isolantes représente de 1 à 10% en poids du poids de la pâte et leur longueur varie entre 2 à 6 mm.

Le document JP56-084876 décrit une électrode positive au nickel comprenant de l'hydroxyde de nickel comme matière active, une couche métallique conductrice ainsi que des fibres de résine telles que des fibres de polyéthylène, en surface, pour améliorer la tenue mécanique et la conductivité de l'électrode.

Le document JP55-004890 décrit une électrode rechargeable pour cellule électrochimique, obtenue par dépôt sur un substrat conducteur, d'une pâte contenant une matière active finement divisée, par exemple à base de nickel, et des fibres de polyéthylène haute densité.

Le document EP-A-0 884 791 décrit une électrode positive de nickel de type empâté comportant un collecteur de courant et une pâte comprenant une matière active à base d'hydroxyde de nickel sous forme de poudre, un matériau conducteur constitué d'un mélange de particules conductrices et de fibres conductrices, et au moins un liant polymère, caractérisée en ce que lesdites particules conductrices ont une dimension moyenne D1 inférieure ou égale à D/20, et en ce que lesdites fibres conductrices ont une dimension moyenne D2 inférieure ou égale à D et une longueur moyenne L2 supérieure ou égale à 25 fois la valeur de D2, D étant le diamètre moyen de la poudre de ladite matière active.

Le document JP63-081766 décrit une anode pour accumulateur alcalin comprenant principalement de l'oxyde de cadmium comme matière active et des fibres non conductrices de polyamide comme matériau de renfort.

Le document US 4 614 696 décrit une plaque d'électrode négative pour accumulateur alcalin de type étanche comprenant de l'oxyde de cadmium comme matière active, des fibres de carbone comme matériau conducteur et des fibres synthétiques, telles que des fibres de polyéthylène, comme matériau de renfort. Les exemples décrivent des fibres de polyéthylène d'une longueur de 0,7 mm en une proportion massique variant entre 0,3 et 1,5 parties du poids de la pâte.

Le document JP56-141170 décrit une électrode rechargeable de type empâtée pour accumulateur alcalin comprenant une matière active à base de cadmium, une résine synthétique telle que des fibres courtes de polyéthylène haute densité comme agent liant et un système cellulosique comme agent d'encollage. Les fibres de polyéthylène utilisées ont une longueur comprise entre 0,5 et 1,0 mm et leur pourcentage massique est de 2 parts du poids de la pâte.

On recherche donc une électrode de nickel pour accumulateur à électrolyte alcalin comportant une quantité réduite de liant par rapport aux électrodes de l'art antérieur et dont la stabilité mécanique de la matière active et l'adhésion au support conducteur sont au moins équivalentes aux électrodes de l'art antérieur.

### RESUME DE L'INVENTION

A cet effet, l'invention propose une électrode positive pour accumulateur à électrolyte alcalin comprenant un support conducteur recouvert d'une pâte comprenant :
- une matière électrochimiquement active,
- un liant et
- des fibres non conductrices de longueur comprise entre 0,05 et 1 mm,
le pourcentage massique des fibres représentant de 0,6 à 1,5% du poids de ladite pâte.

L'invention réside dans la découverte que l'incorporation de fibres non conductrices de longueur comprise entre 0,05 et 1 mm à la matière active, en une quantité allant de 0,6 à 1,5% du poids de la pâte, permet de diminuer la quantité de liant sans que cette diminution soit préjudiciable à la tenue mécanique de la matière active et à son adhésion au support conducteur de courant.

L'invention s'étend à un accumulateur à électrolyte alcalin comprenant une telle électrode.

### EXPOSE DETAILLE DES MODES DE REALISATION DE L'INVENTION

Selon un mode préféré de réalisation de l'invention, l'électrode est de type non frittée, c'est-à-dire empâtée ou plastifiée.

La matière active positive peut être toute matière active positive connue dans l'art des accumulateurs alcalins. On peut citer par exemple une matière active comprenant un hydroxyde à base de nickel ou une matière active comprenant un hydroxyde de manganèse. Les modes de réalisation décrits dans ce qui suit, font référence à une matière active comprenant essentiellement un hydroxyde à base de nickel, sans limitation à cet hydroxyde.

On entend par "hydroxyde à base de nickel", de l'hydroxyde de nickel Ni(OH)₂, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (A1), et au moins un hydroxyde syncristallisé d'un élément choisi parmi le cobalt (Co), la manganèse (Mn), l'aluminium (Al), l'yttrium (Y), le calcium (Ca), le strontium (Sr), le zirconium (Zr), le cuivre (Cu). La matière active peut être également recouverte par un revêtement à base d'un composé de cobalt tel que de l'oxyde ou de l'hydroxyde de cobalt, l'oxyde mixte de lithium et de cobalt LiCoO₂ ou un oxyde de cobalt conducteur de valence supérieure à 2 contenant éventuellement d'autres éléments tels que le nickel, le zinc, l'aluminium et/ou le manganèse.

L'hydroxyde de nickel est un composé peu conducteur qui nécessite en général l'adjonction à la pâte d'un matériau conducteur permettant une bonne percolation électrique. Les particules d'hydroxyde de nickel sont donc de préférence mélangées avec un matériau conducteur comprenant des particules conductrices.

Les particules conductrices peuvent être choisies parmi des particules de carbone, des particules de métal, comme du nickel par exemple, ou de la poudre d'un composé d'un métal de transition comme par exemple Co, CoO, Co(OH)₂, l'oxyde mixte de lithium et de cobalt LiCoO₂ et un oxyde de cobalt conducteur de valence supérieure à 2.

De préférence, les particules conductrices sont constituées essentiellement d'un composé du cobalt, de préférence du cobalt métal Co, de l'oxyde de cobalt CoO, de l'hydroxyde de cobalt Co(OH)₂, de l'oxyde mixte de lithium et de cobalt LiCoO₂ ou un oxyde de cobalt conducteur de valence supérieure à 2.

Avantageusement, le pourcentage massique du matériau conducteur dans la pâte représente de 3% à 15% du poids de la pâte. Au-delà de cette valeur, la capacité volumique de l'électrode diminue du fait de la diminution proportionnelle de la quantité de matière active.

Le liant comprend au moins un polymère choisi parmi un copolymère de styrène et de butadiène (SBR) éventuellement carboxylé, un copolymère d'acrylonitrile et de butadiène (NBR), un copolymère de styrène, d'éthylène, de butylène et de styrène (SEBS), le polytétrafluoroéthylène (PTFE), un copolymère styrène-acrylate (PSA) qui est une combinaison de motifs élémentaires styrène d'une part, et de motifs élémentaires ester acrylique ou acrylate d'autre part, un copolymère styrène, anhydride maléique (SMA).

Avantageusement, le pourcentage massique du liant dans la pâte représente de 0,2% à 2,5% du poids de la pâte.

Afin de faciliter la réalisation de l'électrode, un épaississant est utilisé pour obtenir une viscosité satisfaisante lors du procédé de fabrication, notamment la carboxyméthylcellulose (CMC), la méthylcellulose (MC), la méthylhydroxyéthylcellulose (MHEC), la méthylhydroxypropylcellulose (MHPC), l'hydroxyéthylcellulose (HEC), l'hydroxypropyl-méthylcellulose (HPMC), l'hydroxypropylcellulose (HPC), le polyacide acrylique (PAAc), un épaississant végétal (gomme xanthane, carrageane, etc.)

Avantageusement, le pourcentage massique de l'épaississant dans la pâte représente de 0,05% à 0,5% du poids de la pâte.

Selon l'invention, la pâte comprend des fibres non conductrices de longueur comprise entre 0,05 et 1 mm, et dont le pourcentage massique représente de 0,6 à 1,5% du poids de la pâte.

On entend par "fibres", des particules dont une dimension de l'espace est grande devant l'autre.

Soit D la dimension transversale moyenne et L la longueur moyenne desdites fibres. De préférence, L est supérieure ou égale à 10 fois D ; de préférence encore, L est supérieure ou égale à 25 fois D.

Lesdites fibres sont des fibres non conductrices de courant telles que par exemple des fibres de polyéthylène, de polyamide ou de polypropylène.

De préférence, les fibres non conductrices sont des fibres de polypropylène.

La pâte peut contenir en outre au moins un composé choisi parmi les composés du zinc comme ZnO ou Zn(OH)₂, de l'yttrium comme Y₂O₃ ou Y(OH)₃, de l'ytterbium comme Yb₂O₃ ou Yb(OH)₃, du calcium comme CaO, Ca(OH)₂, de l'erbium comme Er₂O₃, Er(OH)₃. Ce composé est habituellement ajouté sous forme pulvérulente.

La pâte est déposée sur un support de courant pouvant être bidimensionnel ou tridimensionnel.

L'électrode selon l'invention peut être utilisée dans tout accumulateur à électrolyte alcalin, comme par exemple les accumulateurs contenant les couples nickel-métal hydrurable, nickel-cadmium, nickel-fer, nickel-zinc, nickel-hydrogène.

L'électrolyte est en général une solution aqueuse alcaline concentrée comprenant au moins un hydroxyde (KOH, NaOH, LiOH), en une concentration généralement plusieurs fois molaire.

Le séparateur non tissé est en général en polyoléfine par exemple en polyéthylène ou en polypropylène.

De façon classique, on prépare les pâtes pour électrodes, on fabrique les électrodes, puis on superpose au moins une électrode positive, un séparateur et une électrode négative afin de constituer le faisceau électrochimique. On introduit le faisceau électrochimique dans un godet conteneur et on l'imprègne avec un électrolyte alcalin aqueux. On ferme ensuite l'accumulateur, de façon étanche ou non étanche.

L'invention concerne tout format d'accumulateur : format prismatique (électrodes planes) ou format cylindrique (électrodes spiralées ou concentriques).

L'accumulateur selon l'invention est particulièrement bien adapté comme source d'énergie pour les applications portables, les véhicules électriques et hybrides, les applications spatiales, les télécommunications, les applications éclairage de sécurité.

D'autres caractéristiques et avantages de la présente invention apparaîtront à la lecture des exemples.

### EXEMPLES

### Exemple 1

L'électrode positive de type plastifiée A de l'art antérieur est réalisée avec la composition pondérale suivante:

| | |
|---|---|
| matière électrochimiquement active | 90,7% |
| matériau conducteur | 6% |
| liant | 3% |
| épaississant | 0,3% |

La matière électrochimiquement active pulvérulente est constituée d'un hydroxyde à base de nickel. Le matériau conducteur est de l'hydroxyde de cobalt. Le liant est du polystyrène acrylate (PSA). L'épaississant est la carboxyméthylcellulose (CMC). La viscosité de la pâte est ajustée avec de l'eau. La pâte est déposée sur un support bidimensionnel servant de collecteur de courant qui est un feuillard d'acier nickelé. L'électrode est séchée afin d'en éliminer l'eau, puis laminée.

### Exemple 2

L'électrode positive de type plastifiée B de l'art antérieur est réalisée de la même manière que pour l'exemple 1 avec la composition pondérale suivante :

| | |
|---|---|
| matière électrochimiquement active | 93% |
| matériau conducteur | 6% |
| liant | 0,7% |
| épaississant | 0,3% |

Les composants sont identiques à ceux de l'exemple 1.

### Exemple 3

L'électrode positive de type plastifiée C selon l'invention est réalisée de la même manière que pour l'exemple 1 avec la composition pondérale suivante:

| | |
|---|---|
| matière électrochimiquement active | 92,4% |
| matériau conducteur | 6% |
| liant | 0,7% |
| épaississant | 0,3% |
| fibres | 0,6% |

Les fibres sont des fibres de polypropylène de longueur 0,5 mm et de diamètre 20 µm. Les autres composants de l'électrode sont inchangés. L'électrode est ensuite laminée à la même épaisseur que celle de l'électrode de l'exemple 1.

### Exemple 4

L'électrode positive de type plastifiée D en dehors du domaine de l'invention est réalisée de la même manière que pour l'exemple 1 avec la composition pondérale suivante:

| | |
|---|---|
| matière électrochimiquement active | 91% |
| matériau conducteur | 6% |
| liant | 0,7% |
| épaississant | 0,3% |
| fibres | 2% |

Les fibres utilisées sont identiques à celles de l'exemple 3.

### Exemple 5

L'électrode positive de type plastifiée E en dehors du domaine de l'invention est réalisée avec la composition pondérale suivante:

| | |
|---|---|
| matière électrochimiquement active | 92,9% |
| matériau conducteur | 6% |
| liant | 0,7% |
| épaississant | 0,3% |
| fibres | 0,1% |

Les fibres utilisées sont identiques à celles de l'exemple 3.

### Exemple 6

L'électrode positive de type plastifiée F en dehors du domaine de l'invention est réalisée de la même manière que pour l'exemple 1 avec la composition pondérale suivante:

| | |
|---|---|
| matière électrochimiquement active | 90,7% |
| matériau conducteur | 6% |
| liant | 2,9% |
| épaississant | 0,3% |
| fibres | 0,1% |

Les fibres utilisées sont identiques à celles de l'exemple 3.

Un test de tenue mécanique des électrodes positives est réalisé dans les conditions suivantes.

L'électrode est pesée initialement, puis laissée tomber sans vitesse initiale d'une hauteur de 50 cm sur une surface dure et plane. La chute est répétée 10 fois. L'électrode est alors de nouveau pesée et la perte de masse en pourcent par rapport à la masse initialement pesée est représentative de la tenue mécanique de la matière sur le support bidimensionnel.

Les résultats sont rassemblés dans le tableau 1.

**Tableau 1**

| Electrode | A | B | C | D | E | F |
|---|---|---|---|---|---|---|
| Perte de masse (%) | 0,7 | 4 | 0,4 | 0,3 | 3,8 | 0,65 |
| Pourcentage de fibres | - | - | 0,6 | 2 | 0,1 | 0,1 |
| Pourcentage (liant+fibres) | 3 | 0,7 | 1,3 | 2,7 | 0,8 | 3 |

Une perte de masse autour de 0,5% dans ce test peut être considérée comme satisfaisante.

L'électrode A de l'art antérieur présente une perte de masse satisfaisante mais une quantité de liant élevée, égale à 3%.

L'électrode C selon l'invention présente une excellente tenue mécanique, meilleure que celle de l'électrode A, pour un pourcentage massique (liant + fibres) de 1,3% donc inférieur à 3%.

L'électrode B de l'art antérieur comprenant un pourcentage de liant égal à celui de l'invention mais pas de fibres, ne présente pas une tenue mécanique satisfaisante.

L'électrode E en dehors de l'invention ne présente pas une tenue mécanique satisfaisante du fait de la quantité insuffisante de fibres avec un pourcentage de liant faible.

Pour obtenir une tenue mécanique satisfaisante, avec une électrode de type plastifiée et un pourcentage de fibre de 0,1%, il est nécessaire d'avoir un pourcentage de liant de 2,9%, comme observé pour la série F.

Les accumulateurs étanches nickel-métal hydrurable Ni-MH de format AA et dont la capacité C visée est de 1200mAh, sont fabriqués en utilisant les électrodes A à F.

L'électrode négative a comme matière électrochimiquement active un composé intermétallique capable de former une hydrure une fois chargée.

Sa capacité est supérieure à celle de l'électrode positive.

Chaque électrode positive est accolée à une électrode négative dont elle est isolée par un séparateur constitué d'un non-tissé de polypropylène pour former le faisceau électrochimique. Le faisceau est spiralé, inséré dans un godet métallique et imprégné d'un électrolyte alcalin qui est une solution alcaline aqueuse constituée d'un mélange d'hydroxyde de potassium KOH 7,4N, d'hydroxyde de lithium LiOH 0,5N et d'hydroxyde de sodium NaOH 0,4N. Six séries A à F de dix accumulateurs comprenant la même électrode positive sont fabriqués.

Après un repos de 48h à température ambiante, une formation électrique des accumulateurs est effectuée dans les conditions suivantes.
Cycle 1:
   - repos 2h à 75°C;
   - charge à 0,1Ic pendant 4h à 75°C,
      où Ic est le courant nécessaire pour décharger la capacité nominale C de l'accumulateur en 1h ;
   - repos 2h à 20°C ;
   - charge 3h à 0,33Ic ;
   - décharge à 0,2Ic jusqu'à une tension de 0,9V ;
Cycle 2:
   - charge 16h à 0,1Ic ;
   - décharge à 0,2Ic jusqu'à une tension de 0,9V.

Les capacités des accumulateurs au cycle 2 sont rassemblées dans le tableau 2 ci-après.

**Tableau 2**

| Série d'accumulateurs | A | B | C | D | E | F |
|---|---|---|---|---|---|---|
| Capacité au cycle 2 (mAh) | 1220 | - | 1340 | 530 | - | 1210 |

En ce qui concerne la série D, la présence de fibres en forte quantité au sein de l'électrode ne permet pas de réaliser un montage spiralé correct des électrodes. Les électrodes positives plastifiées de type D, bien qu'ayant une perte de masse satisfaisante au test décrit précédemment, sont trop rigides et cassantes et l'ensemble des accumulateurs obtenus avec ces électrodes sont soit en court-circuit, soit présentent des performances médiocres.

Les accumulateurs de la série C permettent un gain de capacité volumique de 10% par rapport aux accumulateurs de la série A. Il est ainsi possible de réaliser des accumulateurs de forte énergie volumique avec les électrodes de type plastifié de l'invention.

## Revendications

1. Electrode positive pour accumulateur à électrolyte alcalin comprenant un support conducteur recouvert d'une pâte comprenant :
- une matière électrochimiquement active,
- un liant et
- des fibres non conductrices de longueur comprise entre 0,05 et 1 mm,
le pourcentage massique des fibres représentant de 0,6 à 1,5% du poids de ladite pâte.

2. Electrode selon la revendication 1, dans laquelle les fibres sont choisies dans le groupe comprenant des fibres de polyéthylène, des fibres de polyamide, des fibres de polypropylène.

3. Electrode selon la revendication 2, dans laquelle les fibres sont des fibres de polypropylène.

4. Electrode selon l'une des revendications précédentes, dans laquelle le pourcentage massique de liant représente de 0,2% à 2,5% du poids de la pâte.

5. Electrode selon l'une des revendications précédentes, dans laquelle la pâte comprend en outre un épaississant.

6. Electrode selon la revendication 5, dans laquelle le pourcentage massique d'épaississant représente de 0,05 à 0,5% du poids de la pâte.

7. Electrode selon l'une des revendications précédentes, dans laquelle la pâte comprend en outre un matériau conducteur.

8. Electrode selon la revendication 7, dans laquelle le pourcentage massique de matériau conducteur représente de 3 à 15% du poids de ladite pâte.

9. Electrode selon l'une des revendications précédentes, dans laquelle le support conducteur est bidimensionnel.

10. Electrode selon l'une des revendications précédentes, dans laquelle la matière électrochimiquement active est un hydroxyde de nickel.

11. Electrode selon l'une des revendications précédentes, dans laquelle l'électrode est non frittée.

12. Accumulateur à électrolyte alcalin comprenant une électrode selon l'une quelconque des revendications précédentes.

## Claims

1. Positive electrode for an alkaline electrolyte battery comprising a conductive support covered with a paste comprising:
- an electrochemically-active material,
- a binder and
- non-conductive fibres with a length comprised between 0.05 and 1 mm,
the weight percentage of the fibres representing from 0.6 to 1.5% of the weight of said paste.

2. Electrode according to claim 1, in which the fibres are chosen from the group comprising polyethylene fibres, polyamide fibres and polypropylene fibres.

3. Electrode according to claim 2, in which the fibres are polypropylene fibres.

4. Electrode according to one of the preceding claims, in which the weight percentage of binder represents from 0.2% to 2.5% of the weight of the paste.

5. Electrode according to one of the preceding claims, in which the paste also comprises a thickening agent.

6. Electrode according to claim 5, in which the weight percentage of thickening agent represents from 0.05% to 0.5% of the weight of the paste.

7. Electrode according to one of the preceding claims, in which the paste also comprises a conductive material.

8. Electrode according to claim 7, in which the weight percentage of the conductive material represents from 3 to 15% of the weight of said paste.

9. Electrode according to one of the preceding claims, in which the conductive support is two-dimensional.

10. Electrode according to one of the preceding claims, in which the electrochemically-active material is an hydroxide of nickel.

11. Electrode according to one of the preceding claims, in which the electrode is non-sintered.

12. Alkaline electrolyte battery comprising an electrode according to any one of the preceding claims.

## Patentansprüche

1. Positive Elektrode für eine Batterie mit alkalischem Elektrolyten, umfassend einen leitfähigen Träger, der mit einer Paste überzogen ist, die Folgendes umfasst:
- ein elektrochemisch aktives Material,
- einen Binder und
- nicht leitfähige Fasern von einer Länge zwischen 0,05 und 1 mm,
wobei der Massenprozentanteil der Fasern 0,6 bis 1,5 Gew.% der Paste ausmacht.

2. Elektrode nach Anspruch 1, wobei die Fasern aus der Polyethylenfasern, Polyamidfasern und Polypropylenfasern umfassenden Gruppe ausgewählt sind.

3. Elektrode nach Anspruch 2, wobei die Fasern Polypropylenfasern sind.

4. Elektrode nach einem der vorangegangenen Ansprüche, wobei der Massenprozentanteil des Binders 0,2 bis 2,5 Gew.% der Paste ausmacht.

5. Elektrode nach einem der vorangegangenen Ansprüche, wobei die Paste ferner ein Verdickungsmittel umfasst.

6. Elektrode nach Anspruch 5, wobei der Massenprozentanteil des Verdickungsmittels 0,05 bis 0,5 Gew.% der Paste ausmacht.

7. Elektrode nach einem der vorangegangenen Ansprüche, wobei die Paste ferner ein leitfähiges Material umfasst.

8. Elektrode nach Anspruch 7, wobei der Massenprozentanteil des leitfähigen Materials 3 bis 15 Gew.% der Paste ausmacht.

9. Elektrode nach einem der vorangegangenen Ansprüche, wobei der leitfähige Träger zweidimensional ist.

10. Elektrode nach einem der vorangegangenen Ansprüche, wobei das elektrochemisch aktive Material ein Nickelhydroxid ist.

11. Elektrode nach einem der vorangegangenen Ansprüche, wobei die Elektrode keine Sinterelektrode ist.

12. Batterie mit alkalischem Elektrolyten, umfassend eine Elektrode nach einem der vorangegangenen Ansprüche.
